(19) Europäisches Patentamt
European Patent Office
Office européen des brevets

(11) Publication number: 0 164 127 B1

# (12) EUROPEAN PATENT SPECIFICATION

(45) Date of publication of patent specification: 25.10.89

(51) Int. Cl.⁴: C 03 B 37/018

(21) Application number: 85107026.8

(22) Date of filing: 07.06.85

## (54) Method for producing glass preform for optical fibers.

(30) Priority: 08.06.84 JP 116498/84

(43) Date of publication of application:
11.12.85 Bulletin 85/50

(45) Publication of the grant of the patent:
25.10.89 Bulletin 89/43

(84) Designated Contracting States:
DE FR GB NL

(56) References cited:
EP-A-0 041 398
EP-A-0 140 651

(73) Proprietor: SUMITOMO ELECTRIC INDUSTRIES LIMITED
No. 15, Kitahama 5-chome Higashi-ku
Osaka-shi Osaka 541 (JP)

(72) Inventor: Kyoto, Michihisa c/o Yokohama Works
Sumitomo Electric Industries, Ltd. 1, Taya-cho
Totsuka-ku Yokohama-shi Kanagawa-ken (JP)
Inventor: Tanaka, Shigeru c/o Yokohama Works
Sumitomo Electric Industries, Ltd. 1, Taya-cho
Totsuka-ku Yokohama-shi Kanagawa-ken (JP)

(74) Representative: Eitle, Werner, Dipl.-Ing. et al
Hoffmann, Eitle & Partner Patentanwälte
Arabellastrasse 4
D-8000 München 81 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 164 127 B1

**Description**

Field of the Invention

The present invention relates to a method for producing a glass preform for an optical fiber and to a method of producing optical fibers.

Background of the Invention

A glass preform made of silica containing substantially no transition metal such as iron is conveniently produced by the vapor-phase axial deposition method (hereinafter referred to as "VAD" method), which comprises flame hydrolyzing halide of Si, Ge, B or P in an oxyhydrogen flame and depositing formed fine glass particles on a seed member to obtain a glass preform. The VAD method is suitable for the production of the glass preform for use in the economical fabrication of an optical fiber having low attenuation of light transmission, an arbitrary distribution of refractive index in its radial direction and homogenous composition in its longitudinal direction and on its circumference. According to the VAD method, the glass preform is produced as follows:

Fine glass particles are produced by flame hydrolysis of a starting glass mateiral with an adequate composition distribution in the radial direction in the flame and then deposited on a rotating seed member such as a glass plate or rod to form a cylindrical fine glass particle mass, namely, a soot preform. The soot preform is then sintered at a high temperature to obtain a transparent glass preform. Advantages of the VAD method are that the yield of the starting glass material is good, that the glass preform contains less impurities except hydroxyl groups, that the producing period of time is short, that the distribution of the refractive index is easily controlled, and that the method includes small number of steps. Therefore, the VAD method is valuable for mass production of the optical fiber. However, the glass preform inevitably contains unreacted water in an amount of 30 to 70 ppm since it is produced by flame hydrolysis.

Recently, it is increasingly desired to use a wavelength range near 1.3 micrometer at which absorption loss due to structural imperfection is lowest for optical transmission purpose. In this wavelength range, however, the absorption loss due to the residual hydroxyl groups is serious. Therefore, it is necessary to decrease the amount of the hydroxyl groups in the optical fiber to 0.3 ppm or less.

The residual hydroxyl groups can be removed by a chemical or physical method. For example, the physical method includes drying with hot air or *in vacuo*, and the chemical method includes one comprising reacting water contained in the soot preform with gaseous halogen-containing compound to decompose water into hydrogen halide and oxygen. However, it is difficult by the physical method to reduce the content of the residual hydroxyl group to 0.1 ppm or less. By the chemical method, even if the soot preform is treated at a temperature higher than 800°C, the content of the residual hydroxyl group is reduced to about 1 ppm at best and it is impossible to reach 0.1 ppm of the residual hydroxyl group. Since the chemical method utilizes the halogen-containing compound (e.g. HF, $Cl_2$, $SOCl_2$, etc.), the surface of the soot preform is roughly etched during sintering under some conditions, which leads to increase of attentuation of light transmission due to irregularity of the interface of the optical fiber. Further, at a certain concentration of the halogen-containing compound, a certain rate of a diluting gas and/or a certain treating temperature, the surface of the soot preform tends to crack. In addition, in the atmosphere comprising the halogen-containing compound, the fine glass particles are contaminated by impurities liberated from the muffle tube such as transition metals which increase attenuation of light transmission and alkali or alkaline earth metals which decrease the mechanical strength of the optical fiber.

In order to overcome these defects, Japanese Patent Publication No. 40096/1982 discloses a method for greatly decreasing the content of the hydroxyl groups to less than 0.1 ppm with a dehydrating agent comprising the halogen-containing compound while suppressing the surface irregularity of the glass preform. This method comprises the first heating step in which the soot preform is heated and sintered in a dehydrating atmosphere comprising halogen or the halogen-containing compound and the second step in which the preform sintered in the first step is kept at such a temperature that the preform considerably shrinks for a certain period of time and then heated to a temperature at which the preform is converted to a transparent glass preform.

Recently, it is found that a quartz glass optical fiber containing an additive (e.g. $GeO_2$, $P_2O_5$, etc.) has considerable number of structural defects and, therefore, hydrogen gas generated in a covering made of silicone or polyamide resins migrates to the defects in the optical fiber to form the hydroxyl groups, which deteriorate the light transmission characteristics of the optical fiber. Such phenomena are found in both a single-mode optical fiber and a multi-graded index optical fibers.

Thus, it is highly desired to decrease the defects in the optical fiber and to suppress the migration of hydrogen from the covering to the defect.

To produce an optical fiber with low attenuation of light transmission, it is inevitable to dehydrate the soot preform of the fine glass particles, and therefore, it is essential to dehydrate the porous preform in an atmosphere of an inert gas containing chlorine gas. For this reason, practically, the optical preform is produced by dehydrating the soot preform in an atmosphere of an inert gas containing chlorine gas and then making the preform transparent, or by simultaneously dehydrating and making the preform transparent in an atmosphere of helium containing chlorine gas (cf. Japanese Patent Publication Nos. 40096/1982 and 13503/1983).

The optical fiber containing the additive such as $GeO_2$ and $P_2O_5$ produced by these methods still has many defects, which form hydroxyl groups with hydrogen migrated from the covering. A heating test of the optical fiber revealed that attenuation of the optical fiber tends to be 10 to 20 dB/KM at a wavelength of 1.30 micrometer after 20 years. The procedure of the heating test comprises keeping the optical fiber at 200°C for 24 hours and estimating the increased amount of the hydroxyl groups. Increase of attenuation of light transmission ($\Delta\alpha$ dB/km) due to the increased amount of the hydroxyl group at a wavelength of 1.41 micrometer is measured and regarded as a value corresponding to the increased amount of the defects in the optical fiber (cf, N. Uesugi et al., Appl. Phys. Lett., *43*, 328 (1983)).

In the conventional methods, however, $\Delta\alpha$ vigorously fluctuates in an optical fiber which is fabricated from a glass preform produced by the conventional hydration method, and it is difficult to sufficiently decrease $\Delta\alpha$.

## Summary of the Invention

One object of the present invention is to provide a method for producing a glass preform for an optical fiber in which the content of the residual moisture is greatly decreased.

Another object of the present invention is to provide a method for producing a glass preform for an optical fiber in which the structural defects due to an additive is suppressed.

Further object of the present invention is to provide a method for producing a glass preform for an optical fiber in which increase of attentuation of light transmission due to the increase of the defects is mimimized.

A further object of the invention is to provide a method for producing a glass preform for use in the fabrication of an optical fiber, by which contamination with impurities, residual water and bubbles in the optical fiber and irregularity of the surface of the optical fiber are greatly reduced, particularly, the residual water is reduced to less than 0.1 ppm, and further deficiency due to the presence of $Ge^{2+}$ is substantially decreased.

Accordingly, the present invention provides a method for producing a $GeO_2$—$SiO_2$ type glass preform for an optical fiber comprising dehydrating a porous soot preform of $GeO_2$—$SiO_2$ glass fine particles in an atmosphere of oxygen containing a fluorine-containing compound and optionally a chlorine-containing compound at such a temperature that the preform does not drastically shrink, and sintering the soot preform in an atmosphere comprising helium at such a temperature that the preform is made transparent.

## Brief Description of the Drawings

Fig. 1 is a graph showing the distribution of $GeO_2$ in the core of the graded type optical fiber produced by the method of the invention, and

Fig. 2 is a graph showing the relationship between the temperature in the dehydration step and the amount of the residual hydroxyl groups.

## Detailed Description of the Invention

According to the present invention, dehydration of the porous soot preform is carried out in an atmosphere of oxygen containing a fluorine-containing compound and optionally a chlorine-containing compound (a dehydrating agent), thereby $\Delta\alpha$ is minimized. Furthermore, when the sintering step is carried out in an atmosphere comprising helium and oxygen, $\Delta\alpha$ is greatly decreased not only at a wavelength of 1.30 micrometer but also at a wavelength of 1.55 micrometer.

This may be explained as follows:

It is known that, during dehydration, $GeO_2$ thermally volatizes or is chlorinated, which induces the defects in the glass. For example, $GeO_2$ is changed to GeO according to the following equation:

$$Ge(IV)O_2 \rightarrow Ge(II)O + 1/2O_2 \quad \text{(I)}$$

(Thermal volatilization)

While $Ge(IV)O_2$ is stable, Ge(II)O is unstable and forms the structural defect. Such defect may be the cause of formation of the hydroxyl group according to the following equation:

$$GeO + 1/2H_2 \rightarrow GeOH$$

It can be understood that the presence of oxygen may prevent the formation of GeO to some extent. Further, the presence of the fluorine-containing compound prohibits the reaction according to the equation (I). This may be qualitatively described as follows:

When $SiO_2$ is present, it selectively reacts with fluorine to form $SiF_4$ and oxygen, which prevents volatilization of $GeO_2$ according to the equation (I). Therefore, the formed GeO is quickly changed to $GeO_2$. This reaction is expressed as follows:

$$2GeO\ (s) + SiO_2 + 2F_2 \rightarrow SiF_4\ (g) \uparrow + 2GeO_2\ (s) \quad \text{(III)}$$

wherein (s) and (g) stand for solid and gas phases, respectively. For the equation (III), Gibbs' free energy at T°K is calculated as follows:

$$-\Delta G(T) = -410 \times 10^3 + 72.2 \times T \text{ cal/mol} \quad (IV)$$

and the reaction always shifts rightwards.

Relationship between the dehydrating temperature and the dehydration effect which is accompanied with shrinkage of the soot preform will be explained by referring to an example wherein $SOCl_2$ is used as a dehydrating agent.

When the porous soot preform is heated in a stream of helium and oxygen carrying $SOCl_2$, which is dissocated to form $SO_2$ and $Cl_2$, the soot preform starts to shrink at a temperature from 1,000°C to 1,300°C and greatly shrinks at 1,400°C. Therefore, it is understood that the dehydration should proceed with comparatively moderate growth of the glass particles, namely, shrinkage of the soot preform. By using $SOCl_2$ as the dehydrating agent under the condition of 1 liter/min. and a flowing rate of helium of 10 liters/min. at 25°C, the residual amount of the hydroxyl groups at various dehydration temperatures are measured. The results are shown in Fig. 2. From these results, it is seen that, in a temperature range between about 950 and 1,250°C, the hydroxyl groups are most effectively removed, and therefore the dehydration preferably proceeds with gradual growth of the glass particles.

It is known that the relationship between the hydration rate and the temperature is expressed by the following equation:

$$k = k_0 e^{-}(10.5 \times 10^3)/RT$$

wherein k is the kinetic constant, $k_0$ is a constant, R = 1.987 cal/mol.deg, and T is an absolute temperature (°K). Thus, as the temperature increases, the dehydration is more easily effected. However, at a higher temperature, the soot preform easily shrinks and its dehydration becomes more difficult. Preferably, the dehydration is carried out at as high temperature as possible but not higher than 1,400°C, for example, from 900 to 1,300°C.

Specific examples of the fluorine-containing compound are $SF_6$, $CF_4$, $C_2F_6$, $SiF_4$, $Si_2F_6$, etc.

Specific examples of the chlorine-containing compound to be used as the dehydrating agent are $Cl_2$, $SOCl_2$, $COCl_2$, $CCl_4$, etc.

The temperature at which the dehydrated soot preform is sintered is preferably from 1,400 to 1,800°C, more preferably, from 1,600 to 1,700°C.

The present invention will be explained further in detail by following Examples, in which a soot preform used was one made by the VAD method, and $SF_6$ and chlorine were used at the fluorine-containing compound and the chlorine-containing compound, respectively.

Dehydrating and sintering conditions in each Example are shown in Table together with the results of the heating test, which procedures are described above.

Example 1

By the VAD method, a soot preform was produced. A graded type of optical fiber, which was fabricated from the glass preform produced from the soot preform, had a core made of $GeO_2$—$P_2O_5$—$SiO_2$ glass and having a distribution of $GeO_2$ as shown in Fig. 1. In the core, $P_2O_5$ was homogeneously distributed.

The porous soot preform was dehydrated and cintered by gradually lowering it in an atmosphere in which each gas was introduced at a rate shown in Table. The content of $P_2P_5$ in the soot preform was about 0.05 % by mole.

Results of Heating Test

Δα was 3.3 dB/km at 1.4 micrometer and less than 0.1 dB/km at 1.55 micrometer (0.1 dB/km being measurable lower limit).

Comparative Example 1

In the same manner as in Example 1 but dehydrating the soot preform in an atmosphere not containing the fluorine-containing compound and oxygen, the glass preform was produced. An optical fiber fabricated from the thus produced glass preform had far larger Δα than that produced in Example 1. This results shows the superior effect of addition of the fluorine-containing compound and oxygen to the dehydrating atmosphere.

Example 2

In the same manner as in Example 1 but dehydrating the soot preform in an atmosphere not containing chlorine, the glass preform was produced. An optical fiber fabricated from the thus produced glass preform had slightly large Δα at a wavelength of 1.41 micrometer. This results shows the addition of only the fluorine-containing compound to the dehydrating atmosphere give slightly inferior dehydration effects but still satisfactory.

Example 3

In the same manner as in Example 1 but sintering the soot preform in an atmosphere of helium containing $SF_6$ and oxygen, the glass preform was produced. An optical fiber fabricated from the thus produced glass preform had smaller Δα at wavelengths of 1.41 and 1.55 micrometer.

Example 4

In the same manner as in Example 1 but using a soot preform having a core made of $GeO_2$—$SiO_2$ glass in place of $GeO_2$—$P_2O_5$—$SiO_2$ glass, the glass preform was produced. An optical fiber fabricated from the thus produced glass preform had Δα of 5 dB/km and about 0.15 dB/km at wavelengths of 1.41 and 1.55 micrometer, respectively.

Examples 5 and 6

In the same manner as in Examples 2 or 3, the same soot preform as produced in Example 4 was dehydrated and sintered. Optical fibers fabricated from these two glass preforms had substantially the same Δα at a wavelength of 1.55 micrometer as but slightly higher at a wavelength of 1.41 micrometer than those fabricated in Examples 2 and 3.

Example 7

In the same manner as in Example 1 but using $C_2F_6$ in place of $SF_6$, the glass preform was produced. An optical fiber fabricated from the thus produced glass preform had substantially the same characteristics as that produced in Example 1.

These results are summarized in following Table.

Table

| EXAMPLE No. | 1 | | Comp. 1 | | 2 | | 3 | | 4 | | 5 | | 6 | |
|---|---|---|---|---|---|---|---|---|---|---|---|---|---|---|
| Composition of soot preform | $GeO_2-P_2O_5-SiO_2$ | | $GeO_2-P_2O_5-SiO_2$ | | $GeO_2-P_2O_5-SiO_2$ | | $GeO_2-P_2O_5-SiO_2$ | | $GeO_2-SiO_2$ | | $GeO_2-SiO_2$ | | $GeO_2-SiO_2$ | |
| Step*1) | (1) | (2) | (1) | (2) | (1) | (2) | (1) | (2) | (1) | (2) | (1) | (2) | (1) | (2) |
| Conditions | | | | | | | | | | | | | | |
| Temperature (°C) | 1,300 | 1,620 | 1,200 | >1,600 | 1,300 | 1,620 | 1,290 | 1,610 | 1,300 | 1,620 | 1,300 | 1,620 | 1,290 | 1,610 |
| Lowering rate (mm/min) | 3 | 4 | 4 | 4 | 3 | 4 | 3 | 4 | 3 | 4 | 3 | 4 | 3 | 4 |
| $Cl_2$ (ml/min.) | 100 | 0 | 160 | 0 | 0 | 0 | 100 | 0 | 100 | 0 | 0 | 0 | 100 | 0 |
| $SF_6$ (ml/min.) | 100 | 0 | 0 | 0 | 100 | 0 | 150 | 50 | 100 | 0 | 100 | 0 | 150 | 50 |
| $O_2$ (ml/min.) | 5 | 0 | 0 | 0 | 5 | 0 | 5 | 50 | 5 | 0 | 5 | 0 | 5 | 50 |
| He (ml/min.) | 0 | 5 | 5 | 5 | 0 | 5 | 0 | 5 | 0 | 5 | 0 | 5 | 0 | 5 |
| Δα at 1.41 μm | 3.3 | | 2.0 | | 4.5 | | 2 | | 5 | | 4.5 | | 2 | |
| Δα at 1.55 μm | <0.1 | | 3.8 | | <0.1 | | 0 | | 0.15 | | 0.3 | | 0.3 | |

In Comparative Examples 2 and 3, graded type optical fiber was fabricated according to methods described in Japanese Patent Publication No. 40096/1982 and 13503/1983, respectively.

Comparative Example 2

According to Japanese Patent Publication No. 40096/1982, a graded type optical fiber comprising a core containing 5 % by mole of $GeO_2$ and 0.5 % by mole of $P_2O_5$ was fabricated. Dehydration of the soot preform was carried out in a furnace kept at 800°C to which a stream of helium was introduced through an inlet at a rate of 10 litres/min. containing $SOCl_2$ bubbled at 25°C by introducing oxygen at a rate of 0.5 liter/min. With exhausting the dehydrating gaseous mixture from an outlet, the furnace temperature was raised at a rate of 150°C/min. to 1,100°C and kept at the same temperature for 1 hour. After terminating supply of $SOCl_2$ and oxygen, the temperature was raised to 1,450°C at a rate of 200°C/min. in a stream of helium. The thus produced glass preform contained 0.05 ppm of the hydroxyl groups.

An optical fiber with core diameter of 50 micrometers fabricated from the glass preform had $\Delta\alpha$ of 15 dB/km at a wavelength of 1.4 micrometer and its attenuation of light transmission at a wavelength of 1.30 micrometer was 0.6 to 0.7 dB/km.

Comparative Example 3

According to Japanese Patent Publication No. 13503/1983, a graded type optical fiber comprising a core containing 5 % by mole of $GeO_2$ and 0.5 % of $P_2O_5$ was fabricated. Dehydration and sintering of the soot preform were simultaneously carried out in an atmosphere of helium containing 2 % by mole of chlorine.

An optical fiber with core diameter of 50 micrometers fabricated from the glass preform had $\Delta\alpha$ of 50 dB/km at a wavelength of 1.4 micrometer and its attenuation of light transmission at a wavelength of 1.30 micrometer was 10.8 dB/km, which is unsatisfactory since attenuation at a wavelength of 1.30 micrometer should be less than 0.5 dB/km.

**Claims**

1. A method of producing a $GeO_2$—$SiO_2$ type glass preform for an optical fiber characterized by dehydrating a porous soot preform of $GeO_2$—$SiO_2$ glass fine particles in an atmosphere of oxygen containing a fluorine-containing compound at such a temperature that the preform does not drastically shrink, and sintering the soot preform in an atmosphere comprising helium at such a temperature that the preform is made transparent.

2. A method according to claim 1, wherein the glass fine particles further comprise $P_2O_5$.

3. A method according to claim 1 or 2, wherein the dehydrating atmosphere further contains a chlorine-containing compound.

4. A method according to claim 3, wherein the chlorine-containing compound is selected from the group consisting of $Cl_2$, $SOCl_2$, $COCl_2$ and $CCl_4$.

5. A method according to any one of claims 1 to 4, wherein the sintering atmosphere contains a fluorine-containing compound and/or oxygen.

6. A method according to any one of claims 1 to 5, wherein the dehydration is carried out at a temperature not higher than 1,400°C.

7. A method according to claim 6, wherein the dehydration temperature is from 900 to 1,300°C.

8. A method according to any one of claims 1 to 7, wherein the fluorine-containing compound is selected from the group consisting of $SF_6$, $CF_4$, $C_2F_6$, $SiF_4$ and $Si_2F_6$.

9. A method of producing an optical fiber in which the method according to any one of claims 1 to 8 is carried out to produce a prefrom and said optical fiber is produced from said preform.

**Patentansprüche**

1. Verfahren zur Herstellung einer Glasvorform der $GeO_2$—$SiO_2$-Art für eine optische Faser, gekennzeichnet durch Dehydratisieren einer porösen Vorform aus rußteilchenförmigen feinen $GeO_2$—$SiO_2$-Glasteilchen in einer Atmosphäre von eine fluorenthaltende Verbindung enthaltendem Sauerstoff bei einer derartigen Temperatur, daß die Vorform nicht drastisch schrumpft, und Sintern der Vorform aus feinen Glasteilchen in einer Helium enthaltenden Atmosphäre bei einer derartigen Temperatur, daß die Vorform transparent wird.

2. Verfahren nach Anspruch 1, dadurch gekennzeichnet, daß die feinen Glasteilchen desweiteren $P_2O_5$ enthalten.

3. Verfahren nach Anspruch 1 oder 2, dadurch gekennzeichnet, daß die dehydratisierende Atmosphäre desweiteren eine Chlor enthaltende Verbindung enthält.

4. Verfahren nach Anspruch 3, dadurch gekennzeichnet, daß die Chlor enthaltende Verbindung aus der Gruppe bestehend aus $Cl_2$, $SOCl_2$, $COCl_2$ und $CCl_4$ ausgewählt ist.

5. Verfahren nach einem der Ansprüche 1 bis 4, dadurch gekennzeichnet, daß die Sinteratmosphäre eine Fluor enthaltende Verbindung und/oder Sauerstoff enthält.

6. Verfahren nach einem der Ansprüche 1 bis 5, dadurch gekennzeichnet, daß die Dehydratisierung bei

einer Temperatur nicht höher als 1400° ausgeführt wird.

7. Verfahren nach Ansprch 6, dadurch gekennzeichnet, daß die Dehydratisierungstemperatur zwischen 900° und 1300°C beträgt.

8. Verfahren nach einem der Ansprüche 1 bis 7, dadurch gekennzeichnet, daß die Fluor enthaltende Verbindung aus der Gruppe bestehend aus $SF_6$, $CF_4$, $C_2F_6$ und $Si_2F_6$ ausgewählt ist.

9. Verfahren zum Herstellen einer optischen Faser, bei welchem das Verfahren nach einem der Ansprüche 1 bis 8 ausgeführt wird, um eine Vorform herzustellen, und die optische Faser aus der Vorform hergestellt wird.

**Revendications**

1. Procédé de fabrication d'une préforme de verre de type $GeO_2$—$SiO_2$ destinée à une fibre optique, caractérisé par la déhydratation d'une préforme poreuse non frittée de fines particules de verre de $GeO_2$—$SiO_2$ en atmosphère d'oxygène contenant un composé comprenant du fluor à une température telle que la préforme ne présente pas de retrait considérable, et par le frittage de la préforme non frittée en atmosphére contenant de l'hélium à une température telle que la préforme est rendue transparente.

2. Procédé selon la revendication 1, dans laquel les fines particules de verre contiennent en outre $P_2O_5$.

3. Procédé selon la revendication 1 ou 2, dans lequel l'atmosphère de déshydratation contient en outre un composé contenant de fluor.

4. Procédé selon la revendication 3, dans lequel le composé contenant du fluor est choisi dans la groupe qui comprend $Cl_2$, $SOCl_2$, $COCl_2$ et $CCl_4$.

5. Procédé selon l'une quelconque des revendications 1 à 4, dans lequel l'atmosphère de frittage contient un composé contenant de fluor et/ou de l'oxygène.

6. Procédé selon l'une quelconque des revendications 1 à 5, dans lequel la déshydratation est réalisée à une température ne dépassant pas 1,400°C.

7. Procédé selon la revendication 6, dans lequel la température de déshydratation est comprise entre 900 et 1,300°C.

8. Procédé selon l'une quelconque des revendications 1 à 7, dans lequel le composé contenant du fluor est choisi dans le groupe contenant $SF_6$, $CF_4$, $C_2F_6$, $SiF_4$ et $Si_2F_6$.

9. Procédé de fabrication d'une fibre optique, dans lequel le procédé selon l'une quelconque des revendications 1 à 8 est mis en oeuvre afin qu'il forme une préforme, et la fibre optique est produite à partir de la préforme.

*Fig. 1*

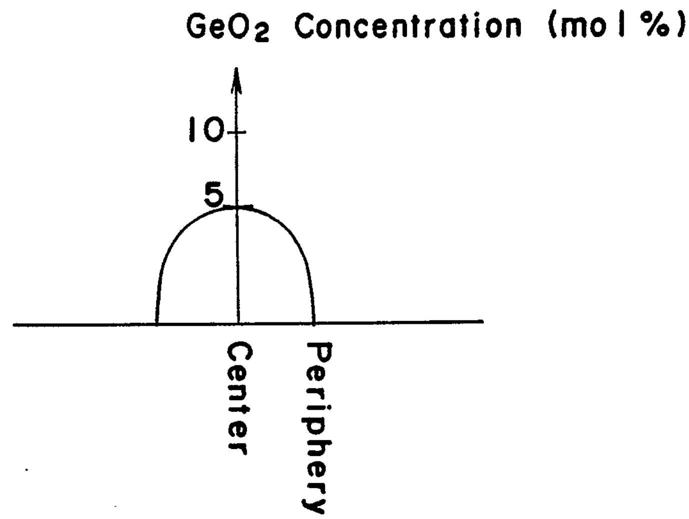
GeO2 Concentration (mol %)
10
5
Center
Periphery

*Fig. 2*

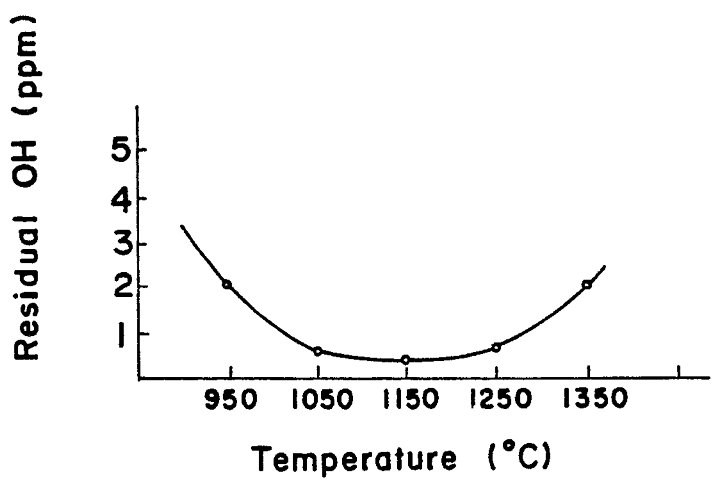
Residual OH (ppm)
5
4
3
2
1
950
1050
1150
1250
1350
Temperature (°C)